# EUROPEAN PATENT APPLICATION

(11) **EP 4 190 862 A1**
(43) Date of publication of application: **07.06.2023**
(21) Application number: 21833249.2
(22) Date of filing: 23.06.2021
(51) Int. Cl.: C08L 95/00, C08K 5/17, E01C 7/18, C09K 23/00

(54) **DURABLE ASPHALT MIX TO BE APPLIED COLD**

(30) Priority: 03.07.2020 ES 202031460 U
(71) Applicant: Coelho, Jorge Luiz, CEP 04.619-032 Campo Belo (BR)
(72) Inventor: Coelho, Jorge Luiz, CEP 04.619-032 Campo Belo (BR)
(74) Representative: Galán Vélez, Reyes
(86) International application number: PCT/BR2021/050272
(87) International publication number: WO 2022/000059

(57) **Abstract**

The invention relates to a durable asphalt mix to be applied cold, in which a hot mix is carried out in the same production plant as used for conventional asphalt production, said mix comprising penetration grade bitumen 35/50 and 50/70, natural and/or artificial aggregates provided in defined granulometric fractions, and a modifying agent in a proportion of between 20 and 35 wt. % in relation to the bitumen, which consists of between 30 and 60 % water, between 10 and 40 % polycyclic aromatic hydrocarbon compound, between 8 and 20 % kerosene, between 5 and 18 % atactic PP (polypropylene), and between 5 and 25 % cyclohexamine. The hot processing temperature is between 130°C and 160°C for a period of approximately 120 minutes. This mix extends the shelf life of the product, which can be stored for up to 3 years, and allows the product to be applied cold.

## Description

### Object

To obtain a durable hot mix asphalt mixture with the technical characteristics required for new paving and technical characteristics required for new paving and repair work that can be stored, transported and cold applied.
that can be stored, transported and cold applied. Enable application and compaction even in adverse weather conditions such as rain. Extend its storage life to a period approaching 36 months.

### Background

The improvement in asphalt mixtures has been picked up by the industry introducing both procedures and new formulations aimed at improving mechanical properties, prolonging its life and improving economic and environmental costs, in these lines many documents describe the addition of different substances such as binders to improve the adhesion of aggregates to bitumen or tar, or other additives that improve its plasticity, compaction or resistance to ultraviolet rays.

The asphalt mix (AC) comes from a plant where it is processed hot and transported to the destination point. This transport, application and compaction must also be done hot, which determines the maximum times in which it can be used, since if its temperature drops too low it will have to be discarded because it has lost its elasticity and adherence, and if it is applied it will disintegrate in a short time. This generates numerous problems among which are the removal of asphalt in bad condition and its replacement, or the elimination of asphalt out of specifications to the plant or landfill, on the other hand it is complex for the applicator to estimate the exact amount needed to perform a job with which there is a tendency to order in excess with the consequent non-recoverable loss.

In this way, as it is exposed, it would be desirable to obtain mixtures whose properties would allow to extend the useful life between its processing in plant and its final application and mainly those which would allow its cold application, the state of the art includes a solution which includes an encapsulated emulsion breaking agent whose rupture is produced as a result of a mechanical effect included in the European patent document with application number 98400561.1 of the applicant COLAS. It is also known a process, ES2123627 owned by CECA S.A. for the preparation of a cold bituminous coating characterized by the coating being a mixed cationic emulsion of hard binder. Another approach, prior to the mixing of a bitumen emulsion in aqueous phase with granulates (mainly silica or calcareous gravels), a process which provides for a hydrophobic treatment of the latter, thus acting on the breaking speed of the emulsion, can be seen in the European patent with application number 01980637.1 of the holder Total Fina Elf France.

The applicant does not know of any technical solutions such as the one advocated which would make it possible to obtain a non-emulsified mixture manufactured hot for cold application which would offer optimum qualities and could be preserved for a period of time close to three years.

### Description

The usual components of asphalt mixtures are aggregates, mineral powder and a hydrocarbon binder. The different combinations of these components make an infinite number of types of mixes, optimal in each case for certain applications. Cold asphalts have been incorporated into the industry due to their advantages, as mentioned above, introducing important advances in terms of bituminous binder specifications and modified bituminous mixtures. The specifications included in the regulations must be met by meeting the technical requirements of the properties required: penetration, softening point ring and ball, Fraass brittle point, elastic recovery, storage stability, solubility or flash point. These natural requirements show the complexity of obtaining a cold asphalt that complies adequately and also satisfies the different application standards, among which we can mention the UNE-EN 933-2 (mm) that establishes the size of the aggregates according to the type of mixture, subdividing it into dense, semi-dense and coarse or the General Technical Specifications for Road and Bridge Works (PG-3) that establishes among numerous points the characteristics of asphalt bitumens to penetration at 25 °C under the UNE-EN 1426 standard.

The present invention defines a modifier of the properties of bituminous mixtures that alters the rheology of asphalt binders, the incorporation of this modifier or additive is performed by the wet process technique, this technique consists of an energetic mixing of bitumen and modifying additive at a bitumen temperature between 130°C and 160°C in which the cold additive is added first, during a period of time that guarantees digestion (approximately 120 minutes). The most important factors governing this process are mixing energy and time, bitumen aromatics content and particle size. By greatly improving its rheology, decreasing its temperature susceptibility and increasing its elasticity, the additive can be used as the sole modifier.

The durable asphalt mixture provided by the claimed invention does not introduce complexity in the manufacturing processes and is manufactured in hot mixing plants with means similar to those used for conventional mixtures which are described to provide clarity about the claimed mixture.

The materials used are as follows:
- aggregates: the aggregates available in the area and stockpiled at the plant are used, of limestone, silica or porphyry type.
- binder: the binder is a 35/50 and 50/70 penetration bitumen corresponding to that established in the General Technical Specifications for Road and Bridge Works (PG-3) of the 50/70 type, and must be kept at a temperature of 130°C to 160°C for correct mixing with the additive.
- Additive: the additive that is cold incorporated into the mixture is a polycyclic aromatic hydrocarbon compound insoluble in water, the percentages and components of which are described in the present invention.

The additive is usually supplied in its entirety in bulk transport containers known as IBC (Intermediate Bulk Container) and weighing approximately 900 kg. Each IBC of modifier product occupies an area of approximately 1.2 m².

Regarding the characteristics of the additive storage space, it would be preferable for it to be under a roof to protect it from rain, since if the additive picks up humidity during storage, at the time of use it generates water vapor and foams when it comes into contact with the bitumen at high temperature, which results in a decrease in hourly production, overflows in the mixer and even the possibility of accidents affecting the operators of the additive unit in the plant.

The modifying additive enters the upper mouth of the chosen bitumen tank, lifting with a telescopic handler in proportions of about 20%-35% by weight with respect to the bitumen, for which it must be ensured that exactly that amount of bitumen is available inside the tank.

A mixing by movement of the binder is carried out in plant for 120 minutes, keeping the final product at a temperature of 130°C for a maximum time of two (2) weeks.

The durable asphalt mix is manufactured in plant with the same facilities required for a conventional hot mix, maintaining mixing temperatures between 130°C and 160°C degrees Celsius. The mixing time will be increased by 20% with respect to a conventional mix, verifying the homogeneity and complete enveloping of the binder and aggregates at the mixer outlet.

The mixture should be stockpiled in a smooth area, with concrete or asphalt surface, avoiding contamination with other materials, such as earth or aggregates, facilitating the loading in the chosen means of transport or delivery container.

The absence of leachates from the mixture in the stockpile must be monitored.

The final result is a working formula that contains both the optimum proportion of each component and relevant data on the manufacturing and compaction temperature, and the characteristics of the asphalt mix: density, voids in the mix, resistance to the action of water and to plastic deformation, or others that are of interest for the type of mix in question. It should be understood that the performance of asphalts varies according to their application, so the requirements of a mixture intended for rolling differ if what is planned is a greater drainage capacity, or if they are to occupy an internal band of purely structural component; this circumstance is indicated to understand the complexity involved in the design of a formulation that exceeds the tests and application standards, and cold asphalts should provide the same behavior as a traditional asphalt. The long-lasting asphalt mix can be supplied in bulk directly in flat-bed trucks or in sacks.

Subsequently, during the laying of the asphalt, and in particular during the compaction process, the additive changes state and makes the bitumen acquire the appropriate viscosity to recover most of the initial mechanical properties of the original asphalt mix.

This shows the great contribution of this asphalt mixture not only in its application, but also the fact that it does not involve any special modification in a conventional plant, increases its viability in the markets.

In this way the wet modified durable asphalt mix comprises of natural and/or artificial aggregates supplied in differentiated granulometric fractions; and in a proportion of 20%-35% by weight with respect to the bitumen of penetration 35/50 and 50/70 of the modifying agent which comprises : water in a percentage between 30%-60% , of a polycyclic aromatic hydrocarbon compound 10%-40%, Kerosene 8%-20%, PP atactic 5%-18% and Cyclohexamine 5%-25%, the additive is supplied cold and its integration with the binder is carried out at a temperature between 130°C and 160°C, temperature that is maintained for a time close to 120 minutes to ensure digestion, as can be appreciated the lasting mixture object of these memories is produced hot.

### Description of the drawings

For a better understanding of what is described in the present memory, some drawings are included in which, by way of example, a list of the figures of the proposed invention is represented.
Figure 1 shows table 2 11.2.a of the requirements established by the UNE-EN 1426 standard, of which the Penetration at 25 °C has been mentioned.
Figure 2 shows the table about the types of mixture according to UNE-EN 932-2 (mm) and its relation with the size of the sieves.

### Description of a preferred embodiment

A preferred embodiment is given by way of example, the materials used in its manufacture, as well as the methods of application and all the accessory details which may arise, provided that they do not affect its essentiality, being independent of the subject matter of the invention.

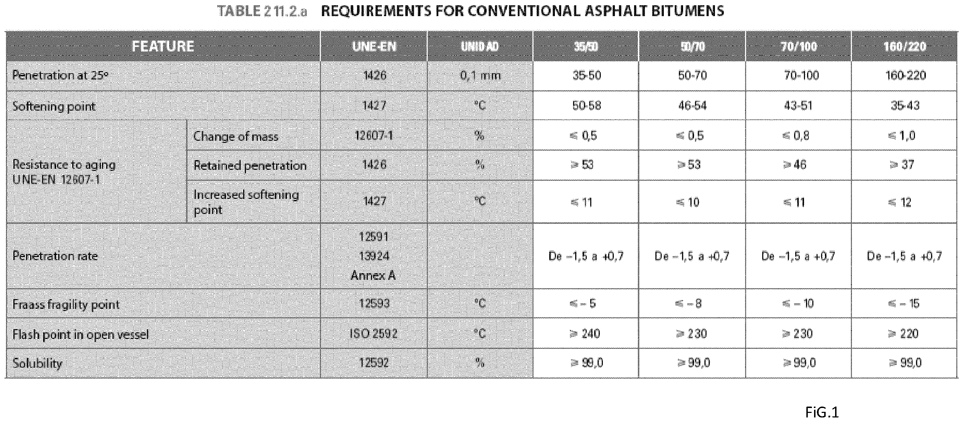

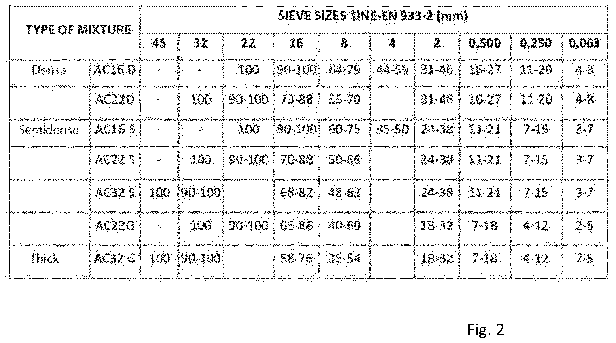

The preferred embodiment describes a durable asphalt mixture which can be stored for a period of up to three years, transported and applied cold, acquiring after compaction the properties of a conventional asphalt. It includes in this realization of an asphalt bitumen of the so-called 50/70 in accordance with the provisions of the General Technical Specifications for Road and Bridge Works (PG-3) whose properties are reflected in the table in Figure 1, of natural aggregates with a size corresponding to a type of mixture classified as semi-dense according to UNE-En 933-2 (mm), Figure 2; it includes in a proportion of 30% by weight with respect to the bitumen of the modifying agent whose participations are: 40% water, 19% polycyclic aromatic hydrocarbon compound, 10% kerosene, 7% PP atactic and 24% cyclohexamine. The addition of the additive is done cold by wet mixing with the bitumen and aggregates for its integration with a temperature between 130°C and 160°C, this temperature is maintained for approximately 120 minutes.

The long-lasting asphalt mix can be supplied in bulk directly in smooth box trucks or also in sacks.

Its compaction affects the action of the additive claimed and the asphalt mixture, providing sufficient plasticity for its application, lasting from the time it was manufactured in the plant up to a period of three years.

## Claims

1. Durable asphalt mixture applied cold, characterized for being its mixture made in hot and comprising a bitumen of penetration 35/50 and 50/70, natural and/or artificial aggregates supplied in differentiated granulometric fractions, a modifying agent in a proportion of 20%-35% in weight with respect to the bitumen constituted by: water in a percentage between 30%-60%, a polycyclic aromatic hydrocarbon compound 10%-40%, kerosene 8%-20%, PP atactic 5%-18% and cyclohexamine 5%-25%.

2. Durable asphalt mixture according to the first claim, **characterized by** the hot processing temperature being between 130°C and 160°C for a time of about 120 minutes.
